# DEMANDE DE BREVET EUROPEEN

(11) **EP 4 844 982 A1**
(43) Date de publication de la demande: **25.11.2026**
(21) Numéro de dépôt: 26179823.5
(22) Date de dépôt: 20.05.2026
(51) Int. Cl.: H02J 13/12, H02J 1/08, H02J 13/13, H04B 3/54

(54) **PROCEDE DE DETERMINATION D'UN EVENTUEL ECART DE PHASE ENTRE DISPOSITIFS NOEUDS D'UNE INFRASTRUCTURE DE DISTRIBUTION ELECTRIQUE**

(30) Priorité: 20.05.2025 FR 2505407
(71) Demandeur: SAGEMCOM ENERGY & TELECOM SAS, 92270 Bois-Colombes (FR)
(72) Inventeur: TEBOULLE, Henri, 92270 BOIS-COLOMBES (FR); ROTER, Ziv, 92270 BOIS-COLOMBES (FR)
(74) Mandataire: Cabinet Le Guen Maillet

(57) **Abrégé**

Une infrastructure de distribution électrique (100) comporte un concentrateur de données (110) et des compteurs électriques intelligents (120), qui sont des dispositifs nœuds qui comportent des interfaces de communication par courants porteurs en ligne et de communications sans-fil par radiofréquences. Chaque dispositif nœud comporte un compteur de détection de phase synchronisé sur une détection de passage à zéro en front montant de signal électrique alternatif. En réception de trame, une couche de contrôle d'accès au medium dédiée aux communications sans-fil par radiofréquences lit, dans une trame reçue, un premier horodatage représentatif d'un instant de transmission de ladite trame, et génère un deuxième horodatage basé sur sa lecture du compteur de détection de phase et sur un délai prédéterminé de traitement de trames en réception par communications sans-fil par radiofréquences. Un éventuel écart de phase entre dispositifs nœuds est alors déterminé à partir de la différence entre le deuxième horodatage et le premier horodatage.

## Description

### DOMAINE TECHNIQUE

La présente invention concerne une détermination d'un éventuel écart de phase entre un premier dispositif nœud et un deuxième dispositif nœud parmi des dispositifs nœuds dans une infrastructure de distribution électrique, qui comporte comme dispositifs nœuds un concentrateur de données et des compteurs électriques intelligents et où chaque dispositif nœud comporte une interface de communication par courants porteurs en ligne et une interface de communication sans-fil par radiofréquences.

### ETAT DE LA TECHNIQUE ANTERIEURE

Dans un réseau de communication par courants porteurs en ligne CPL (PLC, « PowerLine Communications » en anglais), tel que décrit dans les spécifications « Narrowband OFDM PLC specifications for G3-PLC networks », mars 2022, un concentrateur de données (DC, « Data Concentrator » en anglais), situé dans un sous-répartiteur électrique distribuant de l'énergie électrique à un ensemble d'installations électriques supervisées par des compteurs électriques intelligents (« electric smart meters » en anglais) respectifs, comporte 3 phases qu'il connaît de manière absolue : Phase 1 (P1) ; Phase 2 (P2) retardée d'un tiers de période de la fréquence du réseau électrique par rapport au signal électrique alternatif de la Phase 1, soit 120° ; Phase 3 (P3) retardée de deux tiers de période de la fréquence du réseau électrique, soit de 240° par rapport au signal électrique alternatif de la Phase 1.

Comme indiqué dans les spécifications « Narrowband OFDM PLC specifications for G3-PLC networks », mars 2022, il est important de connaître sur quelle phase électrique est connecté tel ou tel compteur électrique intelligent, pour équilibrer le réseau électrique sur chacune des phases et aussi vérifier des pertes inattendues dans le réseau électrique.

Dans un tel réseau de communication par courants porteurs en ligne, tout compteur électrique intelligent est alors apte à déterminer quel est son écart de phase par rapport à un voisin dans le réseau de communication par courants porteurs en ligne, ce voisin pouvant être soit un autre compteur électrique intelligent ou le concentrateur de données. Chaque compteur électrique intelligent, de même que le concentrateur de données, utilise pour ce faire un mécanisme de détection de passage à zéro (ZC, « Zero Crossing » en anglais), en front montant, du signal électrique alternatif, ainsi qu'un compteur de détection de phase (PDC, « Phase Detection Counter » en anglais) synchronisé sur le passage à zéro, en front montant, du signal électrique alternatif. Le compteur de détection de phase a une valeur sur 8 bits, pour laquelle un différentiel de 256 correspond à un retard de 360°, soit une période complète de la fréquence du réseau électrique (e.g., 50 Hz). À noter que dans le cas d'un dispositif polyphasé, la détection dudit passage à zéro s'effectue sur la Phase 1 (P1).

Lors d'un envoi de trame, le transmetteur génère un horodatage basé sur la valeur du compteur de détection de phase au moment où la trame est transmise, ainsi qu'un délai prédéterminé de traitement des trames à l'émission (propre à l'implémentation du transmetteur). Cet horodatage est inscrit dans un champ d'un entête de contrôle de trame (FCH, « Frame Control Header » en anglais), qui est une structure de données transmise au début de chaque trame de couche PHY et qui contient diverses informations sur la trame en question. Le récepteur fournit son propre horodatage de l'instant où la trame en question est reçue, grâce aussi à son mécanisme de détection de passage à zéro et à la valeur de son compteur de détection de phase, en tenant compte d'un délai prédéterminé de traitement des trames en réception (propre à l'implémentation du récepteur), et est ainsi capable de calculer un différentiel de phase entre l'émetteur et le récepteur.

Ceci est expliqué au §8.10 des spécifications « Narrowband OFDM PLC specifications for G3-PLC networks », mars 2022.

Un problème posé par cet état de la technique est qu'il ne prend pas en compte de nouveaux types de compteurs électriques intelligents qui disposent d'une double interface de communication. En effet, des compteurs électriques intelligents qui disposent d'une interface de communication sans-fil par radiofréquences (RF) en sus d'une interface de communication par courants porteurs en ligne sont apparus. Or, lorsque la communication par courants porteurs en ligne est inopérante (e.g., signal trop bruité), il n'existe pas de mécanisme pour transmettre des informations permettant de déterminer l'éventuel écart de phase par rapport à un voisin en utilisant l'interface de communication sans-fil par radiofréquences.

Il est alors souhaitable de pallier ces inconvénients de l'état de la technique.

### EXPOSE DE L'INVENTION

Il est proposé ici un procédé de détermination d'un éventuel écart de phase entre un premier dispositif nœud et un deuxième dispositif nœud parmi des dispositifs nœuds dans une infrastructure de distribution électrique comportant un concentrateur de données situé dans un sous-répartiteur électrique distribuant de l'énergie électrique à un ensemble d'installations électriques supervisées par des compteurs électriques intelligents respectifs, le concentrateur de données et chaque compteur électrique intelligent étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif. Le procédé est exécuté par le premier dispositif nœud et comporte les étapes suivantes :
- lire, par une couche de contrôle d'accès au medium dédiée aux communications sans-fil par radiofréquences, dans une trame reçue du deuxième dispositif nœud par communication sans-fil par radiofréquences, un premier horodatage représentatif d'un instant de transmission de ladite trame par le deuxième dispositif nœud ;
- lire, par la couche de contrôle d'accès au medium dédiée aux communications sans-fil par radiofréquences, la valeur du compteur de détection de phase, et générer, par la couche de contrôle d'accès au medium dédiée aux communications sans-fil par radiofréquences, un deuxième horodatage basé sur la valeur lue du compteur de détection de phase, ainsi qu'un délai prédéterminé de traitement de trames en réception qui correspond à un temps fixe entre la détection de la trame en question par une couche physique dédiée aux communications sans-fil par radiofréquences et la lecture de la valeur du compteur de détection de phase par la couche de contrôle d'accès au medium dédiée aux communications sans-fil par radiofréquences ; et
- déterminer l'éventuel écart de phase entre le premier dispositif nœud et le deuxième dispositif nœud à partir de la différence entre le deuxième horodatage et le premier horodatage.

Ainsi, lorsque la communication par courants porteurs en ligne est inopérante (e.g., signal trop bruité), l'interface de communication sans-fil par radiofréquences est astucieusement utilisée grâce à sa couche de contrôle d'accès au medium qui accède au compteur de détection de phase et compense le temps entre la détection de la trame en question par la couche physique correspondante et la lecture du compteur de détection de phase par ladite couche de contrôle d'accès au medium.

Dans un mode de réalisation particulier, le deuxième horodatage est calculé de la façon suivante : $Rx _ PDC = PDC - \left(Rx_D\times PDC_Freq\right)$ où Rx_PDC est ledit deuxième horodatage, PDC est ladite valeur du compteur de détection de phase, Rx_D est ledit délai prédéterminé de traitement des trames en réception, et PDC_Freq est une fréquence du compteur de détection de phase.

Dans un mode de réalisation particulier, l'éventuel écart de phase est représenté par une information calculée de la façon suivante : $PhaseDifferential = R \left(CounterDifferential/60_Deg_PDC\right) % 6$ avec $CounterDifferential = \left(Rx_PDC-Tx_PDC\right)$ où Tx_PDC est le premier horodatage, R est l'opérateur d'arrondi, 60_Deg_PDC est une constante exprimant 60 degrés par incréments de 256/360° et % est l'opérateur modulo.

Dans un mode de réalisation particulier, lorsque CounterDifferential est négatif, CounterDifferential est translaté dans le domaine des entiers positifs en lui ajoutant 256 unités.

Dans un mode de réalisation particulier, le premier dispositif nœud étant monophasé, lorsque l'information PhaseDifferential est un nombre impair, le premier dispositif nœud détecte une inversion de phase/neutre entre le deuxième dispositif nœud et le premier dispositif nœud.

Dans un mode de réalisation particulier, le premier dispositif nœud étant biphasé, lorsque l'information PhaseDifferential est égale à 3, le premier dispositif nœud détecte qu'il y a rotation de phases entre le deuxième dispositif nœud et le premier dispositif nœud.

Dans un mode de réalisation particulier, le premier dispositif nœud étant triphasé, lorsque l'information PhaseDifferential est égale à 2 ou 4, le premier dispositif nœud détecte qu'il y a rotation de phases entre le deuxième dispositif nœud et le premier dispositif nœud.

Dans un mode de réalisation particulier, le premier dispositif nœud retient une valeur finale d'éventuel écart de phase avec le deuxième dispositif nœud en retenant la valeur d'éventuel écart de phase qui a été la plus obtenue à partir d'une quantité prédéterminée de trames destinées à permettre de déterminer ledit éventuel écart de phase.

Il est également proposé un procédé permettant de déterminer un éventuel écart de phase entre un premier dispositif nœud et un deuxième dispositif nœud parmi des dispositifs nœuds dans une infrastructure de distribution électrique comportant un concentrateur de données situé dans un sous-répartiteur électrique distribuant de l'énergie électrique à un ensemble d'installations électriques supervisées par des compteurs électriques intelligents respectifs, le concentrateur de données et chaque compteur électrique intelligent étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif. Le procédé est exécuté par le deuxième dispositif nœud et comporte les étapes suivantes :
- lire, par la couche de contrôle d'accès au medium dédiée aux communications sans-fil par radiofréquences, la valeur du compteur de détection de phase, et générer, par la couche de contrôle d'accès au medium dédiée aux communications sans-fil par radiofréquences, un horodatage basé sur la valeur lue du compteur de détection de phase, ainsi qu'un délai prédéterminé de traitement de trames en transmission qui correspond à un temps fixe entre la lecture de la valeur du compteur de détection de phase par la couche de contrôle d'accès au medium dédiée aux communications sans-fil par radiofréquences et la transmission de ladite trame par une couche physique dédiée aux communications sans-fil par radiofréquences ;
- construire, par la couche de contrôle d'accès au medium dédiée aux communications sans-fil par radiofréquences, une trame destinée à permettre de déterminer l'éventuel écart de phase entre le premier dispositif nœud et le deuxième dispositif nœud, incluant ledit horodatage ;
- appliquer une procédure de vérification de canal libre, et le cas échéant, transmettre ladite trame construite, en respectant ledit temps fixe.

Ainsi, lorsque la communication par courants porteurs en ligne est inopérante (e.g., signal trop bruité), l'interface de communication sans-fil par radiofréquences est astucieusement utilisée grâce à sa couche de contrôle d'accès au medium qui accède au compteur de détection de phase, compense le temps entre la lecture du compteur de détection de phase par ladite couche de contrôle d'accès au medium et la transmission effective de la trame en question par la couche physique correspondante. De plus, un délai fixe est appliqué à la transmission, c'est-à-dire sans application d'aléa temporel lors de l'accès au canal et sans rejeu.

Il est également proposé un produit programme d'ordinateur, comportant des instructions entraînant l'exécution, par un processeur, de l'un ou l'autre des procédés présentés ci-dessus, dans l'un quelconque de leurs modes de réalisation, lorsque lesdites instructions sont exécutées par le processeur. Il est également proposé un support de stockage, stockant un programme d'ordinateur comportant des instructions entraînant l'exécution, par un processeur, de l'un ou l'autre des procédés présentés ci-dessus, dans l'un quelconque de leurs modes de réalisation, lorsque lesdites instructions sont lues depuis le support de stockage et exécutées par le processeur.

Il est également proposé un dispositif nœud, comportant de la circuiterie électronique configurée pour exécuter l'un ou l'autre des procédés présentés ci-dessus, dans l'un quelconque de leurs modes de réalisation. Il est également proposé une infrastructure de distribution électrique comportant un concentrateur de données situé dans un sous-répartiteur électrique distribuant de l'énergie électrique à un ensemble d'installations électriques supervisées par des compteurs électriques intelligents respectifs, le concentrateur de données et chaque compteur électrique intelligent étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif, dans laquelle chaque dispositif nœud comporte de la circuiterie électronique configurée pour exécuter l'un ou l'autre des procédés présentés ci-dessus, dans l'un quelconque de leurs modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'infrastructure de distribution électrique comportant un concentrateur de données situé dans un sous-répartiteur électrique distribuant de l'énergie électrique à un ensemble d'installations électriques supervisées par des compteurs électriques intelligents respectifs ;
[Fig. 2] illustre schématiquement des communications établies dans l'infrastructure de distribution électrique ;
[Fig. 3] illustre schématiquement un exemple de plateforme matérielle de contrôleur utilisable dans le concentrateur de données et les compteurs électriques intelligents ;
[Fig. 4] illustre schématiquement des interactions entre couches protocolaires dans un transmetteur pour une transmission de trame ;
[Fig. 5] illustre schématiquement des interactions entre couches protocolaires dans un récepteur pour une réception de trame ;
[Fig. 6] illustre schématiquement un algorithme implémenté par le transmetteur, dans un mode de réalisation ; et
[Fig. 7] illustre schématiquement un algorithme implémenté par le récepteur, dans un mode de réalisation.

### EXPOSE DETAILLE DE MODES DE REALISATION

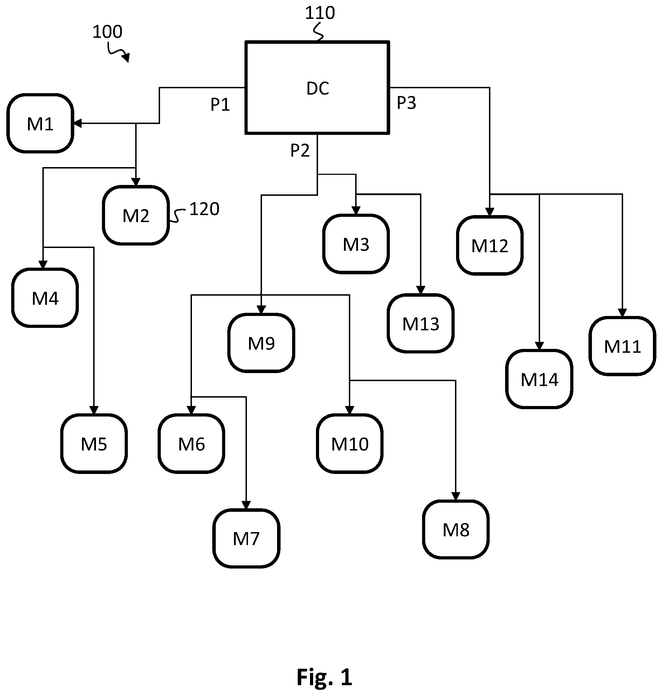

La Fig. 1 illustre schématiquement un exemple d'infrastructure de distribution électrique 100 comportant un concentrateur de données DC 110 situé dans un sous-répartiteur électrique distribuant de l'énergie électrique à un ensemble d'installations électriques (non représentées) supervisées par des compteurs électriques intelligents respectifs M1,..., M14 120.

Les compteurs électriques intelligents M1, M2, M4, M5 120 sont physiquement connectés à la phase 1 (P1) à laquelle est également connecté le concentrateur de données DC 110.

Les compteurs électriques intelligents M3, M6, M7, M8, M9, M10, M13 120 sont physiquement connectés à la phase 2 (P2) à laquelle est également connecté le concentrateur de données DC 110.

Les compteurs électriques intelligents M11, M12, M14 120 sont physiquement connectés à la phase 3 (P3) à laquelle est également connecté le concentrateur de données DC 110.

L'exemple d'infrastructure 100 de la Fig. 1 est purement illustratif et une autre répartition des compteurs électriques intelligents sur 1es 3 phases électriques peut être mise en place, notamment pour une meilleure répartition de charge de la distribution électrique.

Les compteurs électriques intelligents 120 représentés ici sont monophasés. Les compteurs électriques intelligents 120 peuvent aussi être polyphasés (biphasés, triphasés).

Le concentrateur de données DC 110 et chaque compteur électrique intelligent 120 comportent un mécanisme de détection de passage à zéro (ZC, « Zero Crossing » en anglais), en front montant, du signal électrique alternatif, ainsi qu'un compteur de détection de phase (PDC, « Phase Detection Counter » en anglais) synchronisé sur le passage à zéro, en front montant, du signal électrique alternatif, comme présenté au §8.10 des spécifications « Narrowband OFDM PLC specifications for G3-PLC networks », mars 2022.

Du point de vue des communications, le concentrateur de données DC 110 gère un réseau PAN (« Personal Area Network » en anglais) auquel les compteurs électriques intelligents 120 sont rattachés. Le concentrateur de données DC 110 et les compteurs électriques intelligents 120 forment des dispositifs nœuds du réseau PAN. Préférentiellement, le réseau PAN dispose d'un identifiant PANId qui lui est propre. Pour réaliser ces communications, le concentrateur de données DC 110 et chaque compteur électrique intelligent 120 sont hybrides, c'est-à-dire qu'ils disposent d'une interface de communication par courants porteurs en ligne et d'une interface de communication sans-fil par radiofréquences.

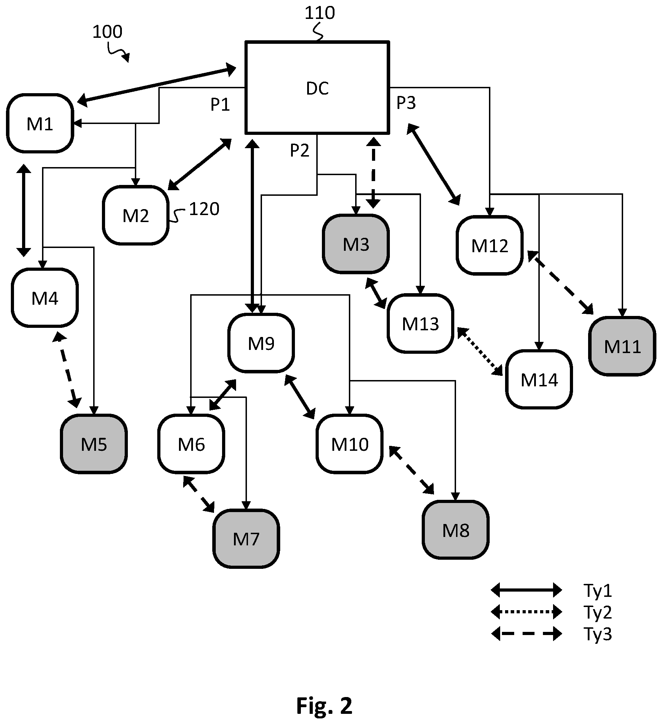

Ainsi, la Fig. 2 illustre schématiquement des communications établies dans l'infrastructure de distribution électrique 100.

Dans l'exemple de la Fig. 2, les compteurs électriques intelligents M1, M2, M9, M12 120 communiquent directement avec le concentrateur de données DC 110 en utilisant des communications directes par courants porteurs en ligne. Et le compteur électrique intelligent M3 120 communique directement avec le concentrateur de données DC 110 en utilisant des communications sans-fil par radiofréquences.

Pour communiquer avec le concentrateur de données DC 110, le compteur électrique intelligent M4 120 utilise un voisin, le compteur électrique intelligent M1 120, comme intermédiaire, par le biais de communications directes par courants porteurs en ligne.

Pour communiquer avec le concentrateur de données DC 110, le compteur électrique intelligent M5 120 utilise un voisin, le compteur électrique intelligent M4 120, comme intermédiaire, par le biais de communications sans-fil par radiofréquences.

Pour communiquer avec le concentrateur de données DC 110, les compteurs électriques intelligents M6, M10 120 utilisent un voisin, le compteur électrique intelligent M9 120, comme intermédiaire, par le biais de communications directes par courants porteurs en ligne.

Pour communiquer avec le concentrateur de données DC 110, le compteur électrique intelligent M7 120 utilise un voisin, le compteur électrique intelligent M6 120, comme intermédiaire, par le biais de communications sans-fil par radiofréquences.

Pour communiquer avec le concentrateur de données DC 110, le compteur électrique intelligent M8 120 utilise un voisin, le compteur électrique intelligent M10 120, comme intermédiaire, par le biais de communications sans-fil par radiofréquences.

Pour communiquer avec le concentrateur de données DC 110, le compteur électrique intelligent M13 120 utilise un voisin, le compteur électrique intelligent M3 120, comme intermédiaire, par le biais de communications directes par courants porteurs en ligne.

Pour communiquer avec le concentrateur de données DC 110, le compteur électrique intelligent M14 120 utilise un voisin, le compteur électrique intelligent M13 120, comme intermédiaire, par le biais de communications par courants porteurs en ligne par diaphonie (les compteurs électriques intelligents M13 et M14 ne sont pas branchés sur la même phase électrique fournie par le concentrateur de données DC 110).

Pour communiquer avec le concentrateur de données DC 110, le compteur électrique intelligent M11 120 utilise un voisin, le compteur électrique intelligent M12 120, comme intermédiaire, par le biais de communications sans-fil par radiofréquences.

Comme montré sur la Fig. 2, différents types de communications peuvent être établis au sein de l'infrastructure de distribution électrique 100 : un premier type (Ty1) en communications directes par courants porteurs en ligne, un deuxième type (Ty2) en communications par courants porteurs en ligne par diaphonie, et un troisième type (Ty3) en communications sans-fil par radiofréquences.

À noter que cette configuration de communication est dynamique et peut évoluer dans le temps (par exemple, en fonction de l'évolution du bruit environnant). Ainsi, la Fig. 2 correspond à une photographie de l'état du réseau PAN à une période donnée que l'on suppose suffisamment stable pour dérouler les algorithmes en émission et réception décrits ci-après.

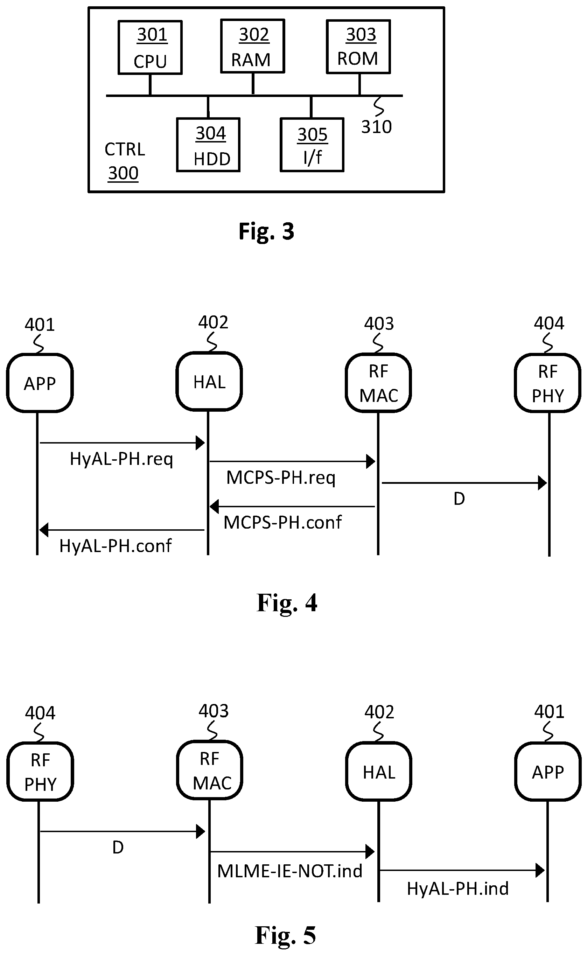

La Fig. 3 illustre schématiquement un exemple de plateforme matérielle de contrôleur CTRL 300 utilisable dans le concentrateur de données DC 110 et les compteurs électriques intelligents 120.

La plateforme matérielle comporte, reliés par un bus de communication 310 : un processeur ou CPU (« Central Processing Unit » en anglais) 301 ; une mémoire vive RAM (« Random-Access Memory » en anglais) 302 ; une mémoire morte 303, par exemple de type ROM (« Read Only Memory » en anglais) ou EEPROM (« Electrically-Erasable Programmable ROM » en anglais), telle qu'une mémoire Flash ; une unité de stockage, telle qu'un disque dur HDD (« Hard Disk Drive » en anglais) 304, ou un lecteur de support de stockage, tel qu'un lecteur de cartes SD (« Secure Digital » en anglais) ; et un gestionnaire d'interfaces I/f 305.

Le gestionnaire d'interfaces I/f 305 permet au contrôleur CTRL 300 d'interagir avec des équipements du dispositif, concentrateur de données DC 110 ou compteur électrique intelligent 120, dans lequel le contrôleur CTRL 300 s'inscrit (paramétrage, relève de consommation, détection de passage à zéro du signal électrique alternatif...). Le gestionnaire d'interfaces I/f 305 permet au contrôleur CTRL 300 d'établir des communications par courants porteurs en ligne et des communications sans-fil par radiofréquences.

Le processeur 301 est capable d'exécuter des instructions qui forment un programme d'ordinateur (produit programme d'ordinateur) et qui sont chargées dans la mémoire vive 302 à partir de la mémoire morte 303, d'une mémoire externe (304), d'un support de stockage (tel qu'une carte SD), ou d'un réseau de communication. Lorsque la plateforme matérielle est mise sous tension, le processeur 301 est capable de lire de la mémoire vive 302 les instructions précitées et de les exécuter. Quand elles sont lues (depuis la mémoire vive 302 ou un support de stockage) et exécutées par le processeur 301, ces instructions (qui forment un programme d'ordinateur) entraînent l'exécution, par le processeur 301, de tout ou partie des étapes, procédés et fonctionnements décrits ici.

Tout ou partie des étapes, procédés et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais).

D'une manière générale, le concentrateur de données DC 110 et les compteurs électriques intelligents 120 comportent de la circuiterie électronique adaptée et configurée pour implémenter les fonctionnements, procédés et étapes décrits ici.

La Fig. 4 illustre schématiquement des interactions entre couches protocolaires dans un transmetteur pour une transmission de trame par communication radiofréquences à destination d'un récepteur, cette trame étant destinée à permettre de déterminer un éventuel écart de phase entre le récepteur et le transmetteur (on peut parler de phase relative entre le récepteur et le transmetteur).

Le transmetteur, tout comme le récepteur, comporte une couche applicative APP 401 (ou couche supérieure, « upper layer » en anglais) et une couche et d'abstraction hybride HAL (« Hybrid Abstraction Layer » en anglais) 402.

Pour les communications sans-fil par radiofréquences, le transmetteur, tout comme le récepteur, comporte une couche de contrôle d'accès au medium MAC (« Medium Access Control » en anglais) 403 dédiée aux communications sans-fil par radiofréquences et une couche physique PHY 404 dédiée aux communications sans-fil par radiofréquences.

Pour les communications par courants porteurs en ligne, le transmetteur, tout comme le récepteur, comporte une couche de contrôle d'accès au medium dédiée aux communications par courants porteurs en ligne et une couche physique dédiée aux communications par courants porteurs en ligne.

La couche d'abstraction hybride HAL 402 chapeaute la couche de contrôle d'accès au medium MAC 403 dédiée aux communications sans-fil par radiofréquences et la couche de contrôle d'accès au medium dédiée aux communications par courants porteurs en ligne. Lorsque les communications s'effectuent par courants porteurs en ligne, la couche d'abstraction hybride HAL 402 interagit, pour le compte de la couche applicative APP 401, avec la couche de contrôle d'accès au medium dédiée aux communications par courants porteurs en ligne. Et lorsque les communications s'effectuent sans-fil par radiofréquences, la couche d'abstraction hybride HAL 402 interagit, pour le compte de la couche applicative APP 401, avec la couche de contrôle d'accès au medium MAC 403 dédiée aux communications sans-fil par radiofréquences.

Ci-après sont décrites des interactions relatives à des communications sans-fil par radiofréquences.

La couche applicative 401, par le biais d'une primitive HyAL-PH.request (notée HyAL-PH.req sur la Fig. 4) demande à la couche d'abstraction hybride HAL 402 une transmission d'une trame, par communications par radiofréquences, destinée à permettre de déterminer l'éventuel écart de phase.

Puis, la couche d'abstraction hybride HAL 402 demande à la couche de contrôle d'accès au medium MAC 403, par le biais d'une primitive MCPS-PH.request (notée MCPS-PH.req sur la Fig. 4), la transmission par communications par radiofréquences de la trame destinée à permettre de déterminer l'éventuel écart de phase. Préférentiellement, la couche d'abstraction hybride HAL 402 utilise une option IE (« Information Element » en anglais) de la couche de contrôle d'accès au medium MAC 403 dédiée aux communications par radiofréquences. L'option IE est une structure de données définie dans les spécifications « Narrowband OFDM PLC specifications for G3-PLC networks », mars 2022. Par exemple, la couche d'abstraction hybride HAL 402 peut utiliser un identifiant de type « G3-PLC Header IE Sub ID » égal à 0x04. Cette primitive instruit la couche de contrôle d'accès au medium MAC 403 de construire la trame destinée à permettre de déterminer l'éventuel écart de phase et d'y inclure, dans un champ PH-IE, un horodatage basé sur la valeur du compteur de détection de phase, ainsi que sur un délai prédéterminé de traitement des trames à l'émission (propre à l'implémentation du transmetteur).

Plus particulièrement, le délai prédéterminé de traitement de trames en transmission correspond à un temps fixe entre la lecture de la valeur du compteur de détection de phase par la couche de contrôle d'accès au medium MAC 403 dédiée aux communications sans-fil par radiofréquences et la transmission de ladite trame par la couche physique PHY 404 dédiée aux communications sans-fil par radiofréquences (typiquement l'instant de sortie du premier bit du premier octet de la trame transmise).

La couche de contrôle d'accès au medium MAC 403 instruit alors la couche physique PHY 404 de transmettre la trame destinée à permettre de déterminer l'éventuel écart de phase, incluant des données D correspondant à la trame construite par la couche de contrôle d'accès au medium MAC 403. La couche physique PHY 404 y ajoute typiquement des données (entêtes...) et signaux (préambule...) propres aux transmissions au niveau physique. La couche de contrôle d'accès au medium MAC 403 instruit la couche physique PHY 404 de transmettre la trame destinée à permettre de déterminer l'éventuel écart de phase, en appliquant un temps constant après une phase d'évaluation de canal libre CCA (« Clear Channel Assessment » en anglais), c'est-à-dire sans application d'aléa temporel avant la transmission, et sans rejeu (« retry » en anglais). Cela permet de respecter le délai prédéterminé de traitement des trames à l'émission (propre à l'implémentation du transmetteur) qui a été mentionné ci-dessus et dont tient compte l'horodatage généré par la couche de contrôle d'accès au medium MAC 403.

Ensuite, une primitive MCPS-PH.confirm (notée MCPS-PH.conf sur la Fig. 4) est appelée par la couche de contrôle d'accès au medium MAC 403 pour informer la couche d'abstraction hybride HAL 402 du résultat de la transmission, par communications sans-fil par radiofréquences, de la trame destinée à permettre de déterminer l'éventuel écart de phase.

Ensuite, une primitive HyAL-PH.confirm (notée HyAL-PH.conf sur la Fig. 4) est appelée par la couche d'abstraction hybride HAL 402 pour informer la couche applicative APP 401 du résultat de la transmission, par communications sans-fil par radiofréquences, de la trame destinée à permettre de déterminer l'éventuel écart de phase.

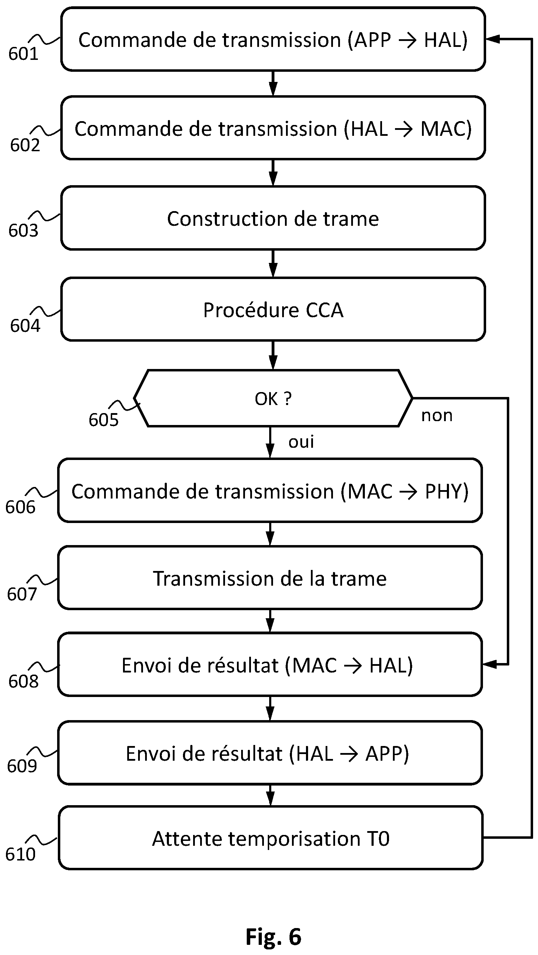

Un mode de réalisation d'opérations réalisées à l'émission de la trame destinée à permettre de déterminer l'éventuel écart de phase est présenté ci-après en relation avec la Fig. 6.

Par exemple, la primitive HyAL-PH.request ne comporte aucun paramètre et indique implicitement que la trame en question doit être transmise avec une adresse source identifiant le transmetteur et une adresse de destination de type diffusion (« broadcast » en anglais, e.g., DstAddr = 0xFFFF), c'est-à-dire destinée à tout voisin du transmetteur dans le réseau PAN.

Par exemple, la primitive MCPS-PH.request comporte les paramètres suivants :
- SrcAddrMode, qui est un paramètre qui indique si la trame fournit une adresse du transmetteur comme adresse source, et le cas échéant, quel est le format de cette adresse source (e.g., adresse complète sur 64 bits ou adresse raccourcie su 16 bits) ;
- DstAddrMode, qui est un paramètre qui indique si la trame fournit une adresse de destination, et le cas échéant, quel est le format de cette adresse de destination (e.g., adresse complète sur 64 bits ou adresse raccourcie su 16 bits) ;
- DstPANId, qui est un paramètre qui indique un identifiant de réseau PAN auquel est adressé la trame ; et
- DstAddr, qui est un paramètre qui fournit une adresse de destination, lorsque le DstAddrMode indique que la trame fournit une telle adresse de destination.

Par exemple, la primitive MCPS-PH.confirm a la même sémantique et comporte les mêmes paramètres que la primitive MCPS-DATA.confirm telle qu'utilisée dans les spécifications « Narrowband OFDM PLC specifications for G3-PLC networks », mars 2022. Et la primitive HyAL-PH.confirm comporte les paramètres « Status » et « TimeStamp », que l'on retrouve dans ladite primitive MCPS-DATA.confirm.

Par exemple, l'option IE comporte les champs de contenu PH-IE suivants :
- PDC, qui indique une valeur de compteur de détection de phase (uniquement significatif pour une trame destinée à permettre de déterminer l'éventuel écart de phase et transmise en communications sans-fil par radiofréquences) ; et
- PhaseDifferential (ou PDiff), qui fournit une information représentative d'un différentiel de phase (uniquement significatif à partir de la couche de contrôle d'accès au medium MAC 403 en réception).

Par exemple, l'information PhaseDifferential est codé sur 3 bits, avec les valeurs suivantes :
- 0 : nœud récepteur et nœud transmetteur en phase ;
- 1 : nœud récepteur en avance de phase de 60° par rapport au nœud transmetteur ;
- 2 : nœud récepteur en avance de phase de 120° par rapport au nœud transmetteur ;
- 3 : nœud récepteur et nœud transmetteur en opposition de phase ;
- 4 : nœud transmetteur en avance de phase de 120° par rapport au nœud récepteur ;
- 5 : nœud transmetteur en avance de phase de 60° par rapport au nœud récepteur ;
- 6 : échec de calcul de différentiel de phase ;
- 7 : non significatif, potentiellement réservé pour un usage futur.

Par exemple, à l'émission, le champ PhaseDifferential prend la valeur 0.

La Fig. 5 illustre schématiquement des interactions entre couches protocolaires dans le récepteur pour une réception de la trame transmise par le transmetteur en application des interactions entre couches protocolaires décrites ci-dessus en relation avec la Fig. 4.

La couche physique PHY 404 dédiée aux communications par radiofréquences reçoit la trame en question, destinée à permettre de déterminer l'éventuel écart de phase.

La couche physique PHY 404 fait ainsi remonter à la couche de contrôle d'accès au medium MAC 403 les données D que, côté transmetteur, la couche de contrôle d'accès au medium MAC 403 a fournies à la couche physique PHY 404 pour la transmission de la trame en question.

La couche de contrôle d'accès au medium MAC 403 utilise les données D pour effectuer un calcul de différentiel de phase, et remonte le résultat du calcul de différentiel de phase à la couche d'abstraction hybride HAL 402 par le biais d'une primitive MLME-IE-NOTIFY.indication (notée MLME-IE-NOT.ind sur la Fig. 5). Ce calcul de différentiel de phase fournit l'éventuel écart de phase entre le transmetteur et le récepteur. Par exemple, la primitive MLME-IE-NOTIFY.indication reprend la structure de la primitive du même nom dans les spécifications « Narrowband OFDM PLC specifications for G3-PLC networks », mars 2022. Préférentiellement, ladite couche de contrôle d'accès au medium MAC 403 modifie l'option IE de la trame reçue pour y inclure une information représentative de l'éventuel écart de phase (dans le champ PhaseDifferential (ou PDiff) tel que mentionné en relation avec la Fig. 4).

Ensuite, la couche d'abstraction hybride HAL 402 remonte l'information représentative de l'éventuel écart de phase à la couche applicative APP 401 par le biais d'une primitive HyAL-PH.indication (notée HyAL-PH.ind sur la Fig. 5).

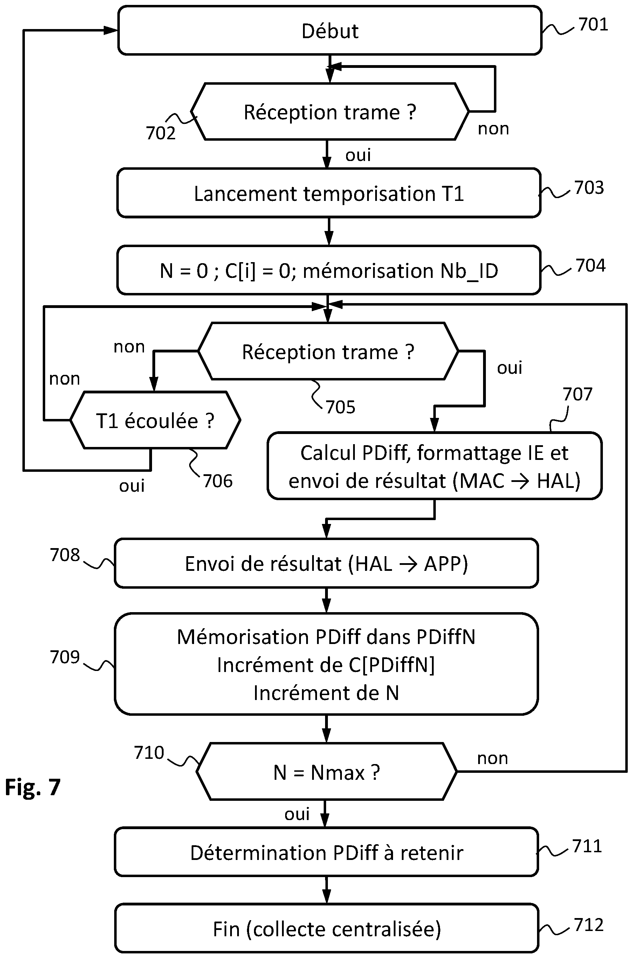

Un mode de réalisation d'opérations réalisées à la réception de la trame destinée à permettre de déterminer l'éventuel écart de phase est présenté ci-après en relation avec la Fig. 7.

Par exemple, la primitive HyAL-PH.indication comporte les paramètres suivants :
- SrcAddrMode ;
- SrcPANId, qui est un paramètre qui indique un identifiant de réseau PAN d'où la trame est originaire ;
- SrcAddr ;
- DstAddrMode ;
- DstPANId ;
- DstAddr ; et
- PhaseDifferential.

La Fig. 6 illustre schématiquement un algorithme implémenté par le transmetteur, dans un mode de réalisation.

Dans une étape 601, la couche applicative 401 du transmetteur commande, à la couche d'abstraction hybride HAL 402 dudit transmetteur, une transmission d'une trame destinée à permettre à un récepteur de déterminer un éventuel écart de phase avec le transmetteur. La transmission doit être réalisée grâce à une communication sans-fil par radiofréquences. La primitive HyAL-PH.request susmentionnée peut être utilisée pour ce faire.

Dans une étape 602, la couche d'abstraction hybride HAL 402 du transmetteur commande à son tour, à la couche de contrôle d'accès au medium MAC 403 (dédiée aux communications sans-fil par radiofréquences) dudit transmetteur, de transmettre la trame destinée à permettre à un récepteur de déterminer l'éventuel écart de phase avec le transmetteur. La primitive MCPS-PH.request susmentionnée peut être utilisée pour ce faire.

Dans une étape 603, ladite couche de contrôle d'accès au medium MAC 403 du transmetteur construit la trame destinée à permettre à un récepteur de déterminer l'éventuel écart de phase avec le transmetteur. La trame en question inclut un horodatage basé sur la valeur du compteur de détection de phase au moment où la trame doit être transmise par la couche physique PHY 404 (dédiée aux communications sans-fil par radiofréquences) dudit transmetteur, ainsi qu'un délai prédéterminé de traitement des trames à l'émission (propre à l'implémentation du transmetteur).

Ainsi, contrairement au mécanisme de détection de phase dans le cadre de communications par courants porteurs en ligne (tel que décrit au paragraphe 8.10 des spécifications « Narrowband OFDM PLC specifications for G3-PLC networks », mars 2022) où la lecture du compteur de détection de phase est faite par la couche physique (des communications par courants porteurs en ligne), la lecture du compteur de détection de phase est faite par la couche de contrôle d'accès au medium MAC 403 dans le cadre des communications sans-fil par radiofréquences.

Dans un mode de réalisation particulier, l'horodatage en question, noté ici Tx_PDC, est obtenu de la façon suivante : $Tx _ PDC = PDC + \left(Tx_D\times PDC_Freq\right)$ où PDC est ladite valeur du compteur de détection de phase, Tx_D est ledit délai prédéterminé de traitement des trames à l'émission (propre à l'implémentation du transmetteur), et PDC_Freq est la fréquence du compteur de détection de phase (soit, pour un compteur sur 8 bits, 12.8 kHz pour une fréquence de signal électrique alternatif de 50 Hz et 15.36 kHz pour une fréquence de signal électrique alternatif de 60 Hz).

Préférentiellement, la trame est construite avec l'option IE susmentionnée.

Dans une étape 604, ladite couche de contrôle d'accès au medium MAC 403 du transmetteur effectue une procédure de vérification de canal libre CCA.

Dans une étape 605, ladite couche de contrôle d'accès au medium MAC 403 du transmetteur vérifie que le canal est effectivement libre. Si tel est le cas, une étape 606 est effectuée ; sinon, une étape 608 est effectuée.

Dans l'étape 606, ladite couche de contrôle d'accès au medium MAC 403 du transmetteur fournit à la couche physique PHY 404 (dédiée aux communications sans-fil par radiofréquences) du transmetteur les données D à transmettre. Contrairement aux transmissions des trames qui ne sont pas destinées à permettre de déterminer un dit éventuel écart de phase, aucun aléa temporel (délai aléatoire) n'est appliqué à l'issue de la procédure de vérification de canal libre CCA. La transmission est effectuée à délai fixe. Dans l'éventualité où ce délai fixe ne peut pas être respecté, alors la transmission est annulée. Aucun rejeu (« retry » en anglais) n'est appliqué.

Ainsi, dans une étape 607, la couche physique PHY 404 du transmetteur réalise la transmission par une communication sans-fil par radiofréquences, puis l'étape 608 est effectuée.

Dans l'étape 608, ladite couche de contrôle d'accès au medium MAC 403 du transmetteur envoie le résultat de la transmission à ladite couche d'abstraction hybride HAL 402 du transmetteur. La primitive MCPS-PH.confirm susmentionnée peut être utilisée pour ce faire.

Dans une étape 609, ladite couche d'abstraction hybride HAL 402 du transmetteur envoie le résultat de la transmission à ladite couche applicative APP 401 du transmetteur. La primitive HyAL-PH.confirm susmentionnée peut être utilisée pour ce faire.

Dans une étape 610, ladite couche applicative APP 401 du transmetteur attend qu'une temporisation de durée prédéterminée T0 soit écoulée avant de renouveler l'étape 601. La durée T0 peut être programmable, et est par exemple égale à 60 secondes.

La Fig. 7 illustre schématiquement un algorithme implémenté par un récepteur d'une trame destinée à permettre de déterminer un éventuel écart de phase, dans un mode de réalisation.

L'algorithme démarre dans une étape 701.

Dans une étape 702, la couche de contrôle d'accès au medium MAC 403 du récepteur vérifie si une trame destinée à permettre au récepteur de déterminer un éventuel écart de phase avec un voisin (transmetteur de la trame en question). Si tel est le cas, la couche de contrôle d'accès au medium MAC 403 du récepteur mémorise un identifiant du transmetteur (par exemple, son adresse SrcAddr dans le réseau PAN) et une indication de réception de la trame est remontée jusqu'à la couche applicative APP 401 du récepteur, et une étape 703 est effectuée ; sinon, l'algorithme boucle sur l'étape 702.

Dans l'étape 703, la couche applicative APP 401 du récepteur lance une temporisation de durée prédéterminée T1. La durée T1 peut être programmable et est par exemple de 2 heures.

Dans une étape 704, la couche applicative APP 401 du récepteur effectue des initialisations de variables. Une variable N est initialisée à 0. Chaque entrée d'un tableau de variables C[i], i = 0,..,5, est initialisée à 0. Un identifiant du transmetteur (par exemple, son adresse SrcAddr dans le réseau PAN) est mémorisé.

Puis le récepteur se met en attente de recevoir une nouvelle trame destinée à permettre au récepteur de déterminer l'éventuel écart de phase avec ce voisin en particulier. Ainsi, dans une étape 705, la couche de contrôle d'accès au medium MAC 403 du récepteur vérifie si une telle trame est nouvellement reçue en provenance de ce voisin (dont ladite couche de contrôle d'accès au medium MAC 403 a mémorisé l'identifiant à l'étape 702). Si tel est le cas, une étape 707 est effectuée ; sinon, une étape 706 est effectuée.

Dans l'étape 706, la couche applicative APP 401 du récepteur, qui n'a pas été notifiée d'une nouvelle réception de telle trame en provenance du voisin en question, vérifie si la temporisation T1 est écoulée ; si tel est le cas, l'algorithme est relancé depuis le début, à l'étape 701. Un nouveau voisin qui va servir de référentiel pour le différentiel de phase va alors probablement être sélectionné (réinitialisation et mémorisation de l'identifiant du transmetteur (par exemple, son adresse SrcAddr dans le réseau PAN) à la nouvelle exécution de l'étape 702). Si la temporisation T1 n'est pas écoulée, l'étape 705 est répétée.

Dans l'étape 707, la couche de contrôle d'accès au medium MAC 403 du récepteur détermine l'éventuel écart de phase avec le transmetteur. Dans un mode de réalisation particulier, la couche de contrôle d'accès au medium MAC 403 du récepteur calcule l'information PhaseDifferential (PDiff sur la Fig. 7) susmentionnée.

Pour ce faire, la couche de contrôle d'accès au medium MAC 403 du récepteur génère un horodatage basé sur la valeur du compteur de détection de phase au moment où la trame est reçue par ladite couche de contrôle d'accès au medium MAC 403 du récepteur, ainsi que sur un délai prédéterminé de traitement des trames en réception (propre à l'implémentation du récepteur).

Plus particulièrement, le délai prédéterminé de traitement de trames en réception correspond à un temps fixe entre la détection de la trame en question par la couche physique PHY 404 dédiée aux communications sans-fil par radiofréquences (typiquement l'instant de réception par ladite couche physique PHY 404 du premier bit du premier octet de la trame en question) et la lecture de la valeur du compteur de détection de phase par la couche de contrôle d'accès au medium MAC 403 dédiée aux communications sans-fil par radiofréquences.

Dans un mode de réalisation particulier, l'horodatage en question, noté ici Rx_PDC, est obtenu de la façon suivante : $Rx _ PDC = PDC - \left(Rx_D\times PDC_Freq\right)$ où PDC est ladite valeur du compteur de détection de phase, Rx_D est ledit délai prédéterminé de traitement des trames en réception (propre à l'implémentation du récepteur), et PDC_Freq est la fréquence du compteur de détection de phase.

La couche de contrôle d'accès au medium MAC 403 du récepteur calcule alors une différence de compteur de détection de phase entre le transmetteur et le récepteur. En reprenant les notations ci-dessus, cette différence, nommée ici CounterDifferential, est : $CounterDifferential = \left(Rx_PDC-Tx_PDC\right)$ où Tx_PDC est la valeur d'horodatage indiquée par le transmetteur dans la trame reçue, qui est lue par ladite couche de contrôle d'accès au medium MAC 403 dans ladite trame reçue.

Dans un mode de réalisation particulier, lorsque la valeur de CounterDifferential est négative, celle-ci peut être translatée dans le domaine des entiers positifs en lui ajoutant 256 unités.

L'information PhaseDifferential, codée sur 3 bits comme déjà détaillé ci-dessus (valeurs de 0 à 5), peut alors être obtenue de la manière suivante : $PhaseDifferential = R \left(CounterDifferential/60_Deg_PDC\right) % 6$ où R est l'opérateur d'arrondi, 60_Deg_PDC est une constante exprimant 60 degrés par incréments de 256/360° (soit 42.66) et % est l'opérateur modulo.

En outre, dans l'étape 707, la couche de contrôle d'accès au medium MAC 403 du récepteur formatte préférentiellement l'option IE pour y inclure l'information PhaseDifferential ainsi obtenue et alors la transmettre à la couche d'abstraction hybride HAL 402 du récepteur. La primitive MLME-IE-NOTIFY.indication peut être utilisée pour ce faire.

Dans une étape 708, la couche d'abstraction hybride HAL 402 du récepteur transmet l'information PhaseDifferential à la couche applicative APP 401 du récepteur. La primitive HyAL-PH.indication peut être utilisée pour ce faire.

Dans une étape 709, la couche applicative APP 401 du récepteur mémorise dans une variable PDiffN la valeur de l'information PhaseDifferential. De plus, la couche applicative APP 401 du récepteur incrémente d'une unité la valeur de la variable C[PDiffN]. Enfin, la couche applicative APP 401 du récepteur incrémente d'une unité la valeur de la variable N.

Dans une étape 710, la couche applicative APP 401 vérifie si la variable N a atteint une valeur prédéterminée Nmax (typiquement, Nmax = 100). En d'autres termes, la couche applicative APP 401 cherche à savoir si un nombre suffisant de trames destinées à permettre de déterminer l'éventuel écart de phase a été reçu de la part du voisin considéré. Si tel est le cas, une étape 711 est effectuée ; sinon, l'étape 705 est répétée, dans l'attente de recevoir, de la part du voisin en question, une nouvelle trame destinée à permettre de déterminer l'éventuel écart de phase.

Dans l'étape 711, la couche applicative APP 401 du récepteur détermine la valeur de l'information PhaseDifferential à retenir. Cette valeur correspond à l'index i de la variable C[i] qui présente la valeur maximale parmi les valeurs stockées dans le tableau C.

Dans une étape 712, il est mis fin à l'algorithme. La couche applicative APP 401 du récepteur peut transmettre l'information PhaseDifferential retenue, ainsi que l'identifiant du voisin ayant servi de référentiel pour déterminer l'information PhaseDifferential, à un autre nœud du réseau PAN, préférentiellement au concentrateur de données DC 110. En effectuant une collecte centralisée de ces informations d'éventuels écarts de phase (informations de phase relative entre dispositifs nœuds) auprès des différents dispositifs nœuds du réseau PAN, le concentrateur de données DC 110 est alors capable de déduire de proche en proche sur quelle phase (information de phase absolue) est connecté chaque compteur électrique intelligent 120 et de dresser une cartographie des branchements sur les différentes phases du sous-répartiteur électrique.

Il ressort de la description ci-dessus de l'algorithme de la Fig. 7 que le récepteur retient une valeur finale d'éventuel écart de phase avec le transmetteur en retenant la valeur d'éventuel écart de phase qui a été la plus obtenue à partir d'une quantité prédéterminée (Nmax) de trames destinées à permettre de déterminer ledit éventuel écart de phase. En variante, le récepteur peut toutefois décider de déterminer l'éventuel écart de phase à partir d'une seule trame destinée à permettre de déterminer ledit éventuel écart de phase.

Grâce à l'information PhaseDifferential, lorsque le récepteur est monophasé, le récepteur peut être capable de déterminer si une inversion phase/neutre existe entre le transmetteur et le récepteur. Ainsi, si l'information PhaseDifferential est un nombre pair (0, 2, 4), alors aucune inversion de phase/neutre n'est détectée, et si l'information PhaseDifferential est un nombre impair (1, 3, 5), alors une inversion de phase/neutre entre le transmetteur et le récepteur est détectée.

Aussi, grâce à l'information PhaseDifferential, lorsque le récepteur est polyphasé, le récepteur peut être capable de déterminer si une rotation de phases existe entre le transmetteur et le récepteur. Ainsi, dans le cas d'un récepteur biphasé (on considère alors qu'il y a deux phases dans l'infrastructure de distribution électrique 100), lorsque l'information PhaseDifferential est égale à 0, le récepteur déduit qu'il n'y a pas de rotation de phases entre le transmetteur et le récepteur ; et lorsque l'information PhaseDifferential est égale à 3, le récepteur détecte qu'il y a rotation de phases entre le transmetteur et le récepteur. Et, dans le cas d'un récepteur triphasé, lorsque l'information PhaseDifferential est égale à 0, le récepteur détecte qu'il n'y a pas de rotation de phases entre le transmetteur et le récepteur ; et lorsque l'information PhaseDifferential est égale à 2 ou 4, le récepteur déduit qu'il y a rotation de phases (respectivement +2 et +1) entre le transmetteur et le récepteur.

## Revendications

1. Un procédé de détermination d'un éventuel écart de phase entre un premier dispositif nœud et un deuxième dispositif nœud parmi des dispositifs nœuds (110, 120) dans une infrastructure de distribution électrique (100) comportant un concentrateur de données (110) situé dans un sous-répartiteur électrique distribuant de l'énergie électrique à un ensemble d'installations électriques supervisées par des compteurs électriques intelligents (120) respectifs, le concentrateur de données (110) et chaque compteur électrique intelligent (120) étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
le procédé étant exécuté par le premier dispositif nœud et comportant :
- lire, par une couche de contrôle d'accès au medium dédiée aux communications sans-fil par radiofréquences (403), dans une trame reçue du deuxième dispositif nœud par communication sans-fil par radiofréquences, un premier horodatage représentatif d'un instant de transmission de ladite trame par le deuxième dispositif nœud ;
- lire, par la couche de contrôle d'accès au medium dédiée aux communications sans-fil par radiofréquences (403), la valeur du compteur de détection de phase, et générer (707), par la couche de contrôle d'accès au medium dédiée aux communications sans-fil par radiofréquences (403), un deuxième horodatage basé sur la valeur lue du compteur de détection de phase, ainsi qu'un délai prédéterminé de traitement de trames en réception qui correspond à un temps fixe entre la détection de la trame en question par une couche physique dédiée aux communications sans-fil par radiofréquences (404) et la lecture de la valeur du compteur de détection de phase par la couche de contrôle d'accès au medium dédiée aux communications sans-fil par radiofréquences (403) ; et
- déterminer l'éventuel écart de phase entre le premier dispositif nœud et le deuxième dispositif nœud à partir de la différence entre le deuxième horodatage et le premier horodatage.

2. Le procédé selon la revendication 1, dans lequel le deuxième horodatage est calculé de la façon suivante : $Rx _ PDC = PDC - \left(Rx_D\times PDC_Freq\right)$ où Rx_PDC est ledit deuxième horodatage, PDC est ladite valeur du compteur de détection de phase, Rx_D est ledit délai prédéterminé de traitement des trames en réception, et PDC_Freq est une fréquence du compteur de détection de phase.

3. Le procédé selon la revendication 2, dans lequel l'éventuel écart de phase est représenté par une information calculée de la façon suivante : $PhaseDifferential = R \left(CounterDifferential/60_Deg_PDC\right) % 6$ avec $CounterDifferential = \left(Rx_PDC-Tx_PDC\right)$ où Tx_PDC est le premier horodatage, R est l'opérateur d'arrondi, 60_Deg_PDC est une constante exprimant 60 degrés par incréments de 256/360° et % est l'opérateur modulo.

4. Le procédé selon la revendication 3, dans lequel lorsque CounterDifferential est négatif, CounterDifferential est translaté dans le domaine des entiers positifs en lui ajoutant 256 unités.

5. Le procédé selon la revendication 3 ou 4, dans lequel, le premier dispositif nœud étant monophasé, lorsque l'information PhaseDifferential est un nombre impair, le premier dispositif nœud détecte une inversion de phase/neutre entre le deuxième dispositif nœud et le premier dispositif nœud.

6. Le procédé selon la revendication 3 ou 4, dans lequel, le premier dispositif nœud étant biphasé, lorsque l'information PhaseDifferential est égale à 3, le premier dispositif nœud détecte qu'il y a rotation de phases entre le deuxième dispositif nœud et le premier dispositif nœud.

7. Le procédé selon la revendication 3 ou 4, dans lequel, le premier dispositif nœud étant triphasé, lorsque l'information PhaseDifferential est égale à 2 ou 4, le premier dispositif nœud détecte qu'il y a rotation de phases entre le deuxième dispositif nœud et le premier dispositif nœud.

8. Le procédé selon l'une quelconque des revendications 1 à 7, dans lequel le premier dispositif nœud retient (711) une valeur finale d'éventuel écart de phase avec le deuxième dispositif nœud en retenant la valeur d'éventuel écart de phase qui a été la plus obtenue à partir d'une quantité prédéterminée de trames destinées à permettre de déterminer ledit éventuel écart de phase.

9. Un procédé permettant de déterminer un éventuel écart de phase entre un premier dispositif nœud et un deuxième dispositif nœud parmi des dispositifs nœuds dans une infrastructure de distribution électrique (100) comportant un concentrateur de données (110) situé dans un sous-répartiteur électrique distribuant de l'énergie électrique à un ensemble d'installations électriques supervisées par des compteurs électriques intelligents respectifs (120), le concentrateur de données (110) et chaque compteur électrique intelligent (120) étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
le procédé étant exécuté par le deuxième dispositif nœud et comportant :
- lire, par la couche de contrôle d'accès au medium dédiée aux communications sans-fil par radiofréquences (403), la valeur du compteur de détection de phase, et générer, par la couche de contrôle d'accès au medium dédiée aux communications sans-fil par radiofréquences (403), un horodatage basé sur la valeur lue du compteur de détection de phase, ainsi qu'un délai prédéterminé de traitement de trames en transmission qui correspond à un temps fixe entre la lecture de la valeur du compteur de détection de phase par la couche de contrôle d'accès au medium dédiée aux communications sans-fil par radiofréquences (403) et la transmission de ladite trame par une couche physique dédiée aux communications sans-fil par radiofréquences (404) ;
- construire (603), par la couche de contrôle d'accès au medium dédiée aux communications sans-fil par radiofréquences (403), une trame destinée à permettre de déterminer l'éventuel écart de phase entre le premier dispositif nœud et le deuxième dispositif nœud, incluant ledit horodatage ;
- appliquer (604) une procédure de vérification de canal libre, et le cas échéant, transmettre (607) ladite trame construite, en respectant ledit temps fixe.

10. Un procédé de détermination d'un éventuel écart de phase entre un premier dispositif nœud et un deuxième dispositif nœud parmi des dispositifs nœuds dans une infrastructure de distribution électrique (100), dans lequel le premier dispositif nœud exécute le procédé selon l'une quelconque des revendications 1 à 8 et le deuxième nœud exécute le procédé selon la revendication 9.

11. Un produit programme d'ordinateur, comportant des instructions entraînant l'exécution, par un processeur, du procédé selon l'une quelconque des revendications 1 à 8 ou le procédé selon la revendication 9, lorsque lesdites instructions sont exécutées par le processeur.

12. Un support de stockage, stockant un programme d'ordinateur comportant des instructions entraînant l'exécution, par un processeur, du procédé selon l'une quelconque des revendications 1 à 8 ou le procédé selon la revendication 9, lorsque lesdites instructions sont lues depuis le support de stockage et exécutées par le processeur.

13. Un dispositif nœud, dit premier dispositif nœud, configuré pour déterminer un éventuel écart de phase entre le premier dispositif nœud et un deuxième dispositif nœud parmi des dispositifs nœuds dans une infrastructure de distribution électrique (100) comportant un concentrateur de données (110) situé dans un sous-répartiteur électrique distribuant de l'énergie électrique à un ensemble d'installations électriques supervisées par des compteurs électriques intelligents (120) respectifs, le concentrateur de données (110) et chaque compteur électrique intelligent (120) étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
le premier dispositif nœud comportant de la circuiterie électronique configurée pour exécuter le procédé selon l'une quelconque des revendications 1 à 8.

14. Un dispositif nœud, dit deuxième dispositif nœud, configuré pour permettre de déterminer un éventuel écart de phase entre un premier dispositif nœud et le deuxième dispositif nœud parmi des dispositifs nœuds dans une infrastructure de distribution électrique (100) comportant un concentrateur de données (110) situé dans un sous-répartiteur électrique distribuant de l'énergie électrique à un ensemble d'installations électriques supervisées par des compteurs électriques intelligents (120) respectifs, le concentrateur de données (110) et chaque compteur électrique intelligent (120) étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
le deuxième dispositif nœud comportant de la circuiterie électronique configurée pour exécuter le procédé selon la revendication 9.

15. Une infrastructure de distribution électrique (100) comportant un concentrateur de données (110) situé dans un sous-répartiteur électrique distribuant de l'énergie électrique à un ensemble d'installations électriques supervisées par des compteurs électriques intelligents (120) respectifs, le concentrateur de données (110) et chaque compteur électrique intelligent (120) étant un dit dispositif nœud comportant une interface de communication par courants porteurs en ligne et une interface de communication sans-fil par radiofréquences, chaque dispositif nœud comportant un mécanisme de détection de passage à zéro en front montant de signal électrique alternatif et un compteur de détection de phase qui est synchronisé sur le passage à zéro en front montant du signal électrique alternatif,
dans laquelle chaque dispositif nœud est un premier dispositif nœud selon la revendication 13 et/ou un deuxième dispositif nœud selon la revendication 14.
